(19) **Europäisches Patentamt**
**European Patent Office**
**Office européen des brevets**

(11) **EP 3 993 316 B1**

(12) **EUROPÄISCHE PATENTSCHRIFT**

(45) Veröffentlichungstag und Bekanntmachung des Hinweises auf die Patenterteilung:
**06.11.2024 Patentblatt 2024/45**

(21) Anmeldenummer: **21167018.7**

(22) Anmeldetag: **06.04.2021**

(51) Internationale Patentklassifikation (IPC):
**H04L 9/40** *(2022.01)* **H04L 9/32** *(2006.01)*
**H04L 9/00** *(2022.01)* **H04W 4/24** *(2024.01)*
**H04M 15/00** *(2024.01)*

(52) Gemeinsame Patentklassifikation (CPC):
**H04L 63/12; H04L 9/3239; H04L 9/3242; H04L 9/50; H04L 63/10; H04M 15/00; H04M 15/8038; H04W 4/24**

(54) **DATENAUSTAUSCH IN DER BLOCKCHAIN**

DATA EXCHANGE IN THE BLOCKCHAIN

ÉCHANGE DE DONNÉES DANS LA CHAINE DE BLOCS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.11.2020 DE 102020213752**

(43) Veröffentlichungstag der Anmeldung:
**04.05.2022 Patentblatt 2022/18**

(73) Patentinhaber: **Deutsche Telekom AG**
**53113 Bonn (DE)**

(72) Erfinder:
• **SCHULZ, Simon**
**33613 Bielefeld (DE)**
• **MEYER BORGSEN, Sebastian**
**33613 Bielefeld (DE)**

(74) Vertreter: **Vossius & Partner**
**Patentanwälte Rechtsanwälte mbB**
**Siebertstraße 3**
**81675 München (DE)**

(56) Entgegenhaltungen:
KR-A- 20180 069 470    KR-A- 20200 086 213
US-A1- 2020 280 444

• UNKNOWN: "ABOUT LF NETWORKING Optimizing Wholesale Intercarrier Settlement with Hyperledger Fabric Blockchain", 30 November 2019 (2019-11-30), XP055832890, Retrieved from the Internet <URL:https://www.hyperledger.org/wp-content/uploads/2019/11/HL_SolutionsBrief_ReduceCost_V8.pdf> [retrieved on 20210818]
• CLEMENTVALE BALTIC OU: "Proposal to eliminate traditional mobile roaming with the use of blockchain technology;DLT-I-108", vol. fgdlt, 2 October 2018 (2018-10-02), pages 1 - 7, XP044253847, Retrieved from the Internet <URL:https://extranet.itu.int/sites/itu-t/focusgroups/fgdlt/input/DLT-I-108.docx> [retrieved on 20181002]

## Beschreibung

Die vorliegende Erfindung betrifft ein Verfahren und eine Vorrichtung zum Datenaustausch in einem Blockchain-Netzwerk.

Für die Implementierung eines Blockchain-Netzwerkes stehen verschiedene Technologien zur Verfügung, beispielsweise Ethereum oder Hyperledger.

Ein solches Blockchain-Netzwerk kann zum Austausch von Daten und der dezentralen und/oder verteilten, revisionssicheren Speicherung von Daten genutzt werden. Bei jedem schreibenden Zugriff einer Partei ist jedoch auch für alle anderen Parteien sichtbar, was geschrieben wurde und auch wer die Transaktion initiiert hat.

Es gibt jedoch auch Anwendungen in denen einzelne Parteien in einem Blockchain-Netzwerk zusätzlich vertrauliche Daten austauschen möchten. Vorzugsweise möchten die Parteien Daten austauschen, welche sich auf ein internes Dokument beziehen. Vorzugsweise wurde dieses Dokument zuvor über einen sicheren Kanal unter allen Teilnehmern, vorzugsweise einer Gruppe von Teilnehmern, ausgetauscht. Mit anderen Worten es existiert ein ausgetauschter Schlüssel bzw. ein geteiltes Geheimnis. Wer mit wem über die Blockchain interagiert, vorzugsweise Geschäfte macht, soll jedoch gegenüber Dritten geheim bleiben.

Zusätzlich möchte man aber nicht auf bekannte Vorteile der Blockchain-Technologie, wie etwa die Dezentralität, Sicherheit, Transparenz, höhere Geschwindigkeit und die Nachvollziehbarkeit, verzichten. Bisherige Blockchain-Lösungen bieten jedoch hinsichtlich der oben genannten Anforderung noch keine zufriedenstellende Lösung.

In der Hyperledger Fabric Blockchain gibt es sogenannte "Channels", um private Teilblockchains für eine Gruppe von N Teilnehmern, beispielsweise bilaterale Geschäftsbeziehungen, zu modellieren. Ausgetauschte Daten innerhalb eines Channels sind nur dem jeweiligen Teilnehmerkreis einsehbar. Der Nachteil ist, dass diese Channels immer vorab erzeugt werden und es für N Teilnehmer im Netzwerk N*N Channels geben muss. Bei einer großen Anzahl von Teilnehmern steigt die Anzahl der Channels sehr schnell an und man stößt auf

Eine weitere Möglichkeit zum privaten Datenaustausch in der Hyperledger Fabric Blockchain sind sogenannte private Collections. Auch diese haben den Nachteil, dass sie vorab definiert werden müssen, d.h. N*N. Des Weiteren sind die Schreibzugriffe und somit die Beziehungen der Partner weiterhin sichtbar und nur der Dateninhalt wird vor außenstehenden Teilnehmern verborgen.

Die vorhandenen Möglichkeiten sind daher nicht zufriedenstellend, da weder die reduzierte Performance bei hoher Konfigurationskomplexität noch die Offenlegung der Kommunikationsbeziehungen, vorzugsweise der Geschäftsbeziehungen, im oben beschriebenen Anwendungsszenario akzeptabel sind.

Insbesondere ist es für bestimmte Anwendungen unerlässlich, die Geschäftsbeziehungen der involvierten Partner vor Dritten zu verbergen.

Zusammenfassend besteht das Problem, dass N Partner Daten über eine Blockchain austauschen möchten, ohne dass Dritte dadurch Rückschlüsse auf die Geschäftsbeziehungen ziehen können, obwohl alle Transaktionen und Daten im Blockchain-Netzwerk von allen Teilnehmern eingesehen werden können. Mit anderen Worten, es sollen Daten über eine Blockchain ausgetauscht werden, ohne dass Dritte den Empfänger der Daten nachvollziehen können.

US 2020/0280444 A1 betrifft ein System und Techniken zur Identitäts- und elektronischen Signaturprüfung, die Blockchain-Technologie verwenden. Die Identität aller Benutzer, die ein Dokument ausführen, kann basierend auf einer Authentifizierung durch ein vertrauenswürdiges unabhängiges System überprüft werden. Informationen zu den jeweiligen Unterzeichnern, dem Dokument oder Smart Contract und der Authentifizierung können als Transaktionen in einer Blockchain gespeichert werden.

KR 2018 0069470 A betrifft eine Abrechnungsmethode für Roaming-Gebühren. Gemäß einer Ausführungsform umfasst das Abrechnungsverfahren für Roaming-Gebühren eines Benutzerterminals durch eine Heimnetzwerkvorrichtung die Schritte: Registrieren eines Roaming-Abrechnungsbuchs eines Benutzerterminals in einer Blockchain; und Übertragen einer Adresse der Blockchain, in der das Roaming-Abrechnungsbuch registriert ist, an das Benutzerterminal.

Die oben genannten Aufgaben werden durch den Gegenstand der beigefügten unabhängigeren Ansprüche gelöst. Die abhängigen Ansprüche beziehen sich auf weitere Aspekte der Erfindung.

Die Erfindung ist in den angefügten Ansprüchen definiert. Jegliche nachfolgende Beschreibungsteile die Ausführungsformen, Aufgaben und/oder Beispiele betreffen, welche nicht unter die Ansprüche fallen, sind als nicht zur Erfindung gehörig zu betrachten.

Erfindungsgemäß wird bereitgestellt ein Verfahren zum Datenaustausch zwischen einem ersten und einem oder mehreren zweiten Teilnehmern in einem Blockchain-Netzwerk; wobei das Blockchain-Netzwerk konfiguriert ist, Daten in einem Ledger zu speichern; wobei jeder erste und zweite Teilnehmer Zugriff auf ein bestimmtes Dokument D hat; wobei jeder erste Teilnehmer den jeweiligen Partnernamen des einen oder mehreren zweiten Teilnehmers kennt; wobei eine bestimmte Speicherstelle im Ledger für die Daten, welche im Datenaustausch von einem ersten Teilnehmer an einen oder mehrere zweite Teilnehmer ausgetauscht werden, aus einem Hashwert des Dokuments D und des jeweiligen Partnernamens des jeweiligen zweiten Teilnehmers bestimmt wird; und wobei die Daten des Datenaustauschs vom ersten Teilnehmer an die bestimmte Speicherstelle geschrieben werden.

Vorzugsweise werden die Daten des Datenaustauschs von dem einen oder den mehreren zweiten Teilnehmern ausgelesen.

Vorzugsweise werden die Daten des Datenaustauschs von dem einen oder den mehreren zweiten Teilnehmern ausgelesen.

In einer Ausführungsform der Erfindung wird die bestimmte Speicherstelle unter Verwendung des Keyed-Hash Message Authentication Code Verfahren, HMAC, vorzugsweise in Bezug auf das Dokument D, bestimmt.

In einer Ausführungsform der Erfindung wird ein SHA256 als Hashfunktion verwendet.

In einer Ausführungsform der Erfindung wird die bestimmte Speicherstelle aus H (Partnername + H(D)) bestimmt, wobei H eine Hash-Funktion bezeichnet.

In einer Ausführungsform der Erfindung erfolgt eine Offenlegung des Dokuments D und/oder eines Hashes des Dokuments D zur nachträgliche Berechnung der Speicherstellen.

In einer Ausführungsform der Erfindung ist das Dokument D ein Roaming Vertrag zwischen zwei Mobilfunkanbietern.

In einer anderen Ausführungsform ist das Dokument D ist ein digitaler Vertrag und die Daten des Datenaustauschs sind eine digitale Signatur.

Erfindungsgemäß wird ein Knoten eines Blockchain-Netzwerks bereitgestellt, der als Datenverarbeitungsvorrichtung konfiguriert ist das Verfahren nach einer der Ausführungsformen durchzuführen, als erster Teilnehmer durchzuführen.

Erfindungsgemäß wird ein Knoten eines Blockchain-Netzwerks bereitgestellt, der als Datenverarbeitungsvorrichtung konfiguriert ist das Verfahren nach einer der Ausführungsformen durchzuführen, als zweiter Teilnehmer durchzuführen.

Erfindungsgemäß wird ein Blockchain-Netzwerk als Datenverarbeitungsnetzwerk bereitgestellt mit mindestens einem erfindungsgemäßen ersten und zweiten Knoten.

Erfindungsgemäß wird ein Computerprogramm bereitgestellt, umfassend Befehle, die bei der Ausführung des Programms durch einen ersten Computer diesen veranlassen, die Schritte des Verfahrens nach einer der Ausführungsformen auszuführen, als erster Teilnehmer auszuführen.

Erfindungsgemäß wird ein Computerprogramm bereitgestellt, umfassend Befehle, die bei der Ausführung des Programms durch einen ersten Computer diesen veranlassen, die Schritte des Verfahrens nach einer der Ausführungsformen auszuführen, als zweiter Teilnehmer auszuführen.

Erfindungsgemäß wird ein computerlesbarer Datenträger bereitgestellt, auf dem das erfindungsgemäße Computerprogramm gespeichert ist.

**Kurze Beschreibung der Zeichnungen**

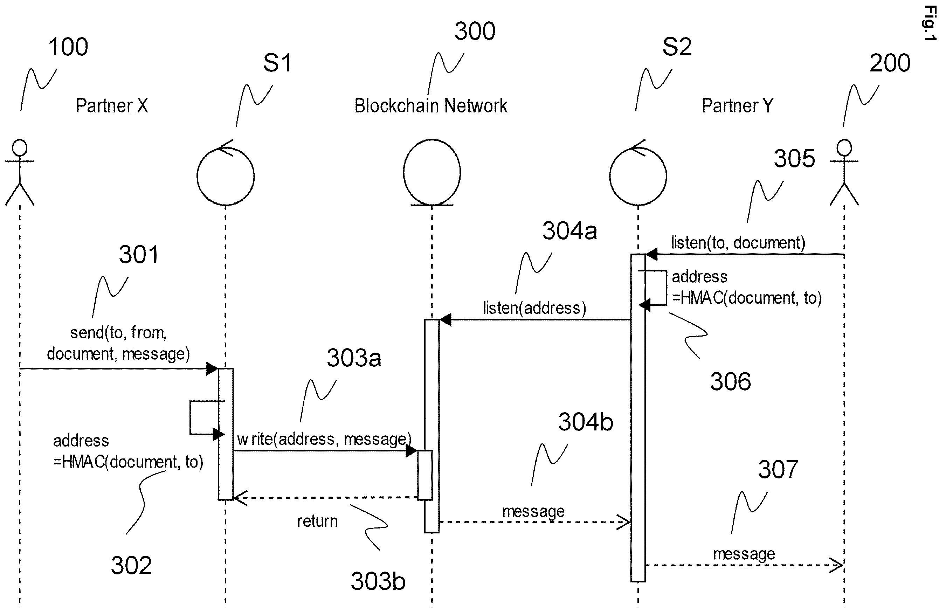

Die oben beschriebenen Aufgaben, Vorteile und Merkmale der vorliegenden Erfindung werden in der folgenden detaillierten Beschreibung bestimmter bevorzugter Ausführungsformen der Erfindung leichter verständlich, wenn sie in Verbindung mit den begleitenden Zeichnungen betrachtet werden, in denen Fig. 1 eine Block-Diagramm Darstellung des erfindungsgemäßen Verfahrens zeigt.

**Detaillierte Beschreibung der Zeichnungen**

Im Folgenden werden Ausführungsformen der Erfindung beschrieben. Es wird darauf hingewiesen, dass einige Aspekte einer der beschriebenen Ausführungsformen auch in anderen Ausführungsformen zu finden sein können, sofern dies nicht anders angegeben oder offensichtlich ist. Aus Gründen der besseren Verständlichkeit wird jedoch jeder Aspekt nur bei der ersten Erwähnung ausführlich beschrieben, und jede wiederholte Beschreibung desselben Aspekts wird weggelassen.

In einer Ausführungsform der Erfindung haben M Parteien, auch als Teilnehmer bezeichnet, Zugriff auf ein Blockchain-Netzwerk. Jeder Teilnehmer kann in einer Transaktion beliebige Speicheradressen im Ledger lesen und schreiben. Bei jedem schreibenden Zugriff ist jedoch auch für alle anderen Teilnehmer sichtbar, was geschrieben wurde und auch wer die Transaktion initiiert hat.

Eine Subgruppe von N Parteien möchte Daten bezüglich eines vertraulichen Dokumentes austauschen. Allen N Parteien liegt eine Kopie der vertraulichen Daten vor, vorzugsweise eines gemeinsamen Dokuments, welche auch als Geheimnis bezeichnet wird. Besonders bevorzugt ist das Dokument eine Vereinbarung zu Roaming-Gebühren. Die auszutauschenden Daten sind ohne das Dokument wertlos und können offen geteilt werden. Die Geschäftsbeziehungen der N Partner darf Dritten gegenüber jedoch nicht offengelegt werden.

Ein Anwendungsfall der Erfindung ist das Signieren von Roaming-Verträgen. Nachdem die Vertragsdaten unter zwei Partnern verteilt wurden, vorzugsweise über einen gesicherten Kanal, möchten die einzelnen Teilnehmer, d.h. die beiden Partner, nun diesen Vertrag digital auf einer Blockchain unterschreiben. Die kryptographische Unterschrift kann mit dem erfindungsgemäßen Verfahren auf einer offen einsehbaren Blockchain hinterlegt werden, ohne die Geschäftsbeziehung zwischen den beiden Partnern offen zu legen.

In einer Ausführungsform der Erfindung erfolgt zuerst ein Austausch von vertraulichen Daten, d.h. eines Dokuments. Der Austausch erfolgt vorzugsweise über eine externe und sichere, besonders bevorzugt über eine 1-zu-1 Verbindung, zwischen den einzelnen Partnern.

In einer Ausführungsform der Erfindung wird eine kryptografische Hashfunktion H unter Verwendung des Keyed-Hash Message Authentication Code Verfahren, HMAC, verwendet. Die kryptographische Hashfunktion erlaubt ein effizientes Berechnen eines Hash Wertes basierend auf einer Eingabe. In der umgekehrten Richtung ist das Errechnen des Eingabedokumentes, basierend auf dem Hash hingegen nicht möglich. Die Ausführung des Verfahrens lässt sich darstellen als:

$$\text{HMAC}_K(M) = \text{H}((K \oplus opad) \parallel \text{H}((K \oplus ipad) \parallel M))$$

Basierend auf der HMAC Funktion wird nun basierend auf dem Dokument und dem Partnernamen eine Speicheradresse berechnet. In einer Ausführungsform der Erfindung, handelt es sich bei HMAC um eine nach RFC2104 standardisierte Funktion. In der obigen Darstellung bedeutet "∥" ein einfaches Aneinanderhängen, d.h. ab ∥ cd => abcd; ⊕ bedeutet ein bitweises XOR.

Die Berechnung des HMAC wird auf Seite 2 des RFC2104 [1] beschrieben. Angenommen H ist eine kryptographische Hash-Funktion mit der Ausgabelänge von B Bytes. In dem hier vorliegenden Fall ist davon auszugehen, dass das Dokument länger ist, als die Blockgröße B des Hash-Algorithmus. In dem Fall sei K=H(Dokument) und M als der Partnername definiert. Für den Fall, das die Länge von K kleiner als die Schlüssellänge des verwendeten Hashing-Algorithmus ist, wird K durch Anfügen von Nullen verlängert

Es ist wichtig sicherzustellen, dass das Dokument nicht leicht erratbar ist und genügend Entropie aufweist. Eine Rückwärtsberechnung aus einem Hash zum Dokument ist kryptographisch zwar ausgeschlossen, werden jedoch sehr ähnliche bzw. einfach zu erratende Dokumente ausgetauscht, ist eine Brute-Force-Attacke denkbar. Ein Angreifer könnte in diesem Spezialfall einfach sämtliche "sinnvollen" Versionen des Dokumentes durchprobieren, den HMAC ausrechnen und das Resultat mit den auf die Blockchain geschriebenen Daten vergleichen. Bei einem Treffer hätte der Angreifer sowohl die Geschäftsbeziehung als auch den tatsächlichen Inhalt des Dokumentes "rekonstruiert".

Ein Beispiel: Die ausgetauschten Dokumente seien immer wie folgt aufgebaut:
"Partner X zahlt Y pro Jahr Z Euro Miete" Die einzigen, sich ändernden Werte in diesem Dokument sind X, Y und Z. Wenn ein Angreifer nun einfach alle möglichen Werte für Partner X und Y sowie einen Betrag 1...9999 durchprobiert, könnte er somit dieses Dokument und damit auch den HMAC erraten.

In Anwendungsformen der Erfindung ist es daher bevorzugt, dass die ausgetauschten Dokumente genügend Entropie aufweisen und keinem einfachen Schema folgen.

Im Detail wird in Ausführungsformen der Erfindung HMAC wie folgt berechnet:

1) Es werden so viele 0 Bytes an K angehängt bis K B Bytes lang ist
2) Berechne K XOR ipad
3) Hänge das M an Ergebnis von (2) an: K XOR ipad ∥ M
4) Anwenden von H auf das Ergebnis (3): H(K XOR ipad ∥ M)
5) Berechne K XOR opad
6) Hänge das Ergebnis von (4) hinten an das Ergebnis (5): K XOR opad ∥ H(K XOR ipad ∥ M)
7) Wende H nun auf das Ergebnis (6) an: H(K XOR opad ∥ H(K XOR ipad ∥ M))

Durch das Anhängen und das XOR wird ein kryptographisch sicherer Schlüssel generiert. Wäre der Schlüssel sehr kurz, wäre das Verfahren nicht mehr sicher genug. Das padding sorgt dafür, dass ein zu kurzer Key K auf die Bitlänge des verwendeten Hashing Algorithmus aufgefüllt wird.

Es ist deutlich, dass die Begriffe Dokument und Partnernamen breit auszulegen sind. "Dokument" umfasst alle Formen von zuvor ausgetauschten Daten. "Partnername" umfasst alle öffentlich bekannten Informationen über einen Teilnehmer, vorzugsweise eine ID.

In Ausführungsformen der Erfindung, die auf der Hyperledger Fabric Blockchain beruhen, bietet es sich an, die MSP-ID der Partner innerhalb des Netzwerkes zu verwenden. So sind eine direkte Erkennung und eindeutige Identifizierung innerhalb des Netzwerkes gegeben.

In einer Ausführungsform der Erfindung, wird als Hash Funktion H vorzugsweis SHA256 verwendet. Alternativ oder ergänzend zum SHA256 Algorithmus können auch diverse andere Hashalgorithmen wie etwa MD5, SHA1 oder SHA3 verwendet werden. Relevante Kriterien sind Schlüssellänge und Sicherheit, daher ist SHA256 bevorzugt.

In einer Ausführungsform der Erfindung, möchte Partner X eine Nachricht S bezüglich des Dokument D an Partner Y schicken. Erfindungsgemäß schreibt PartnerX die Daten der Nachricht auf folgende Speicheradresse auf dem Ledger:

$$\text{Ledger}[HMAC_K(Y)] := S_y,$$

wobei Ledger [X] hier beispielhaft als der Inhalt der Speicherstelle X im Ledger steht.

Mit anderen Worten die Speicheradresse für die Nachricht wird durch den ersten Partner X bestimmt, indem HMAC angewendet wird auf den Partnernamen des zweiten Partners Y und den Hash des Dokuments D (K=H(D)).

Es ist anzumerken, dass der Inhalt der Nachricht S an der bestimmten Speicheradresse, als solche weiterhin öffentlich für alle Teilnehmer in der Blockchain sichtbar abgelegt ist. Dieser Datenaustausch eignet sich also nur für Daten, die an sich nicht schützenswert sind.

In dem oben genannten Anwendungsfall der Erfindung handelt es sich bei der Nachricht S vorzugsweise um eine digitale kryptographische Signatur, welche wiederum keine Rückschlüsse auf die zugrunde liegenden Daten zulässt. Die eigentliche Nachricht S ist also öffentlich, der Empfänger und somit also auch die Geschäftsbeziehung zwischen X und Y, ist für Dritte jedoch nicht ersichtlich.

In einer Ausführungsform der Erfindung, wollen drei Firmen *FA, F*B und *F*C Daten bezüglich eines Dokumentes D austauschen. Möchte Firma *FA* nun Daten für Firma *F*B hinterlegen errechnet sie die Speicherstelle auf welche *FA* die Daten hinterlegt nun als $S1 = HMAC_D(FB)$.

Die Firma *F*B kann nun den geschriebenen Wert auslesen und ihrerseits eine Nachricht an *FA* senden indem sie ihrerseits an Adresse $S2 = HMAC_D(FA)$ schreibt.

Alle drei Firmen *FA, F*B und *F*C verfügen über das Dokument D und können basierend auf dem jeweiligen Partnernamen der anderen Firma und dem Dokument eindeutig bestimmen, von wem welche Information an wen gerichtet ist. Eine Außenstehende Firma FE kann dies nicht, da sie keine Kenntnisse über den Inhalt des Dokumentes D hat.

Die beschriebenen Ausführungsformen der Erfindung sind unabhängig von der verwendeten Blockchain Technologie solange diese die Möglichkeit bietet, Daten in einem Ledger zu speichern. Es ist keine Modifikation der zugrundeliegenden Blockchain Software nötig.

Ausführungsformen der Erfindung sind auf einer Blockchain implementiert, welche das Schreiben von beliebigen Speicheradressen erlauben. In einer bevorzugten Ausführungsform ist das erfindungsgemäße Verfahren für eine Hyperledger Fabric Blockchain implementiert. Ferner ist eine Implementierung auf einer Ethereum Blockchain bevorzugt, da auch diese Blockchain Lösung das Schreiben von beliebigen Speicheradressen erlaubt: In einem Ethereum Smart Contract ist es möglich auf einen so genannten Speicherbereich lesend und schreibend zuzugreifen. Dieser Speicherbereich erlaubt es jeder 32-Byte Adresse einen eindeutigen 32-Byte Wert zuzuweisen.

Eine Ausführungsform der Erfindung betrifft das Roaming. Unter dem Begriff Roaming versteht man die Möglichkeit eines Mobilfunk Teilnehmers, welcher in einem fremden Netz angemeldet ist, weiterhin Telefon-, Daten- und sonstige Mobilfunkdienste zu nutzen. Roaming kommt immer dann zum Einsatz, wenn der Teilnehmer das Netz seines Providers nicht erreichen kann, sei es aufgrund fehlender Funkabdeckung innerhalb des eigenen Landes als auch im Ausland. Telefoniert ein Kunde über ein fremdes Netz, werden die Datenpakete über das fremde Netz weitergeleitet und sämtliche Nutzungsdauern protokolliert.

Um Roaming zu ermöglichen bestehen weltweit Verträge der einzelnen Provider untereinander. In diesen Verträgen werden u.a. sämtliche Abrechnungsmodalitäten, bevorzugt Preis pro Dateneinheit beim Datentransfer oder dem Preis pro Zeiteinheit für Anrufe, festgelegt. Am Ende einer Abrechnungsperiode werden die Verbräuche sämtlicher genutzten Dienste aufsummiert und an die jeweiligen Provider der fremden Nutzer weitergeleitet.

Diese Verträge werden bilateral zwischen einzelnen Providern bzw. deren länderspezifischen Tochtergesellschaften geschlossen. Um weltweites Roaming anbieten zu können sind eine Vielzahl von Verträgen notwendig. Das Aushandeln, der Austausch und das Unterzeichnen dieser Verträge sind zeit- und kostenintensiv sowie wenig digitalisiert. Teilweise werden die Verträge per Fax ausgetauscht.

Auch der Austausch der Abrechnungsdaten ist noch nicht vollständig digitalisiert und eventuelle Ungereimtheiten, wie z.B. unterschiedliche Erfassung der telefonierten Minuten beim weiterleitenden und dem eigentlichen Provider, ziehen langwierige Nachverhandlungen nach sich und erfordern teilweise den Einsatz eines Clearinghauses.

Viele dieser Probleme würden sich mit Hilfe einer Blockchain-Lösung vermeiden lassen. Dezentralität, Sicherheit, Transparenz, höherer Geschwindigkeit und die Nachvollziehbarkeit bieten hier sehr hohes Potential.

Eine Ausführungsform der Erfindung betrifft einen Austausch von Roaming Verträgen. Die Erstellung eines Vertrages zur Abrechnung einzelner Mobilfunkleistungen ist kein strikt linearer Prozess und erfordert den mehrfachen Austausch des Entwurfes zwischen beiden Parteien. Nach einigen Iterationen einigen sich beide Partner auf die Abrechnungsmodalitäten und unterzeichnen beide das Vertragsdokument.

Sowohl die Entwurfsphase als auch das Unterzeichnen des Vertrages lässt sich sehr gut mit verfügbaren Blockchain Lösungen realisieren. Die Offenheit und Nachvollziehbarkeit der Blockchain Technologie ist hier jedoch Fluch und Segen zugleich. Einerseits profitiert der Ablauf von genau diesen Eigenschaften, zum anderen möchte man aber weder Geschäftsdetails noch Geschäftsbeziehungen mit Dritten teilen.

Die vorliegende Erfindung ermöglicht einen sicheren Austausch von Daten zwischen n Vertragspartnern ohne das Dritte erschließen können wer, wann mit wem Daten austauscht bzw. Geschäfte macht.

Eine Ausführungsform der Erfindung betrifft einen Austausch der Abrechnungsdaten und/oder einen Dispute Prozess. Nach dem Aushandeln und Unterzeichnen der Roaming Verträge, werden die anfallenden Gebühren basierend auf Nutzungsdauern und ausgehandelten Preislisten sowie Rabattmodellen berechnet.

Auch in diesem Anwendungsfall, dem Austausch der Abrechnungsdaten und die Klärung eventuell anfallender Streitigkeiten, kann eine Blockchain-Lösung mit ihrer Transparenz und Nachvollziehbarkeit punkten. Aber auch hier ist es notwendig die Geschäftsbeziehungen der einzelnen Parteien zu schützen.

Sollte es im Rahmen der Klärung einer Streitigkeit notwendig sein, die ausgetauschten Daten an Dritte, wie zum Beispiel eine Clearingstelle offen zu legen, ist dies einfach möglich. In einer Ausführungsform der Erfindung erfolgt eine Weitergabe des initialen Dokumentes an die Clearingstelle. Damit ist es der Clearingstelle möglich, ebenfalls die geheimen Schreibpositionen zu berechnen. Die Nachvollziehbarkeit und die Unveränderbarkeit der Transaktionen im Blockchain-Netzwerk erlaubt es nun der Clearingstelle den Austausch der Daten inklusive exakter Zeitstempel nachzuvollziehen. Eventuelle Streitigkeiten lassen sich so einfach beilegen.

Eine Ausführungsform der Erfindung betrifft eine Erstellung digitaler Signaturen. Angenommen zwei Parteien haben ein Dokument vorliegen, das beide unterschreiben müssen. In der analogen Welt könnten beide Parteien sich an einem Ort treffen und das Dokument unterschreiben. Alternativ könnte das Dokument per Post zwischen beiden Parteien hin und her geschickt und nacheinander unterschrieben werden.

Eine digitale Lösung würde auch hier von der Blockchain-Technologie profitieren da die aufwändigen manuellen Arbeitsschritte entfallen. Des Weiteren ist bei der Blockchain Lösung eindeutig nachvollziehbar ist wer, wann und was genau unterschrieben wurde. Eine solche Lösung bietet also neben Vorteilen bezüglich der Nachvollziehbarkeit auch weitere Vorteile in Bezug auf die Sicherheit und der höheren Geschwindigkeit.

Der Aspekt der vollständigen Transparenz bisheriger Blockchain-Lösungen ist auch hier Vor- und Nachteil zugleich. Die Nachvollziehbarkeit und Beweisbarkeit von jeder einzelnen Transaktion ist zum einen eines der Hauptargumente für eine Blockchain-Lösung, zugleich aber auch ein Nachteil, wenn es darum geht Geschäftsbeziehungen geheim zu halten. Sei es aus Gründen der Wahrung von Geschäftsgeheimnissen oder der Einhaltung von Datenschutzrichtlinien.

An diesem Punkt setzt die hier vorgestellte Lösung an und ermöglicht die Geheimhaltung der Geschäftsbeziehungen. Ohne Kenntnis des Dokumentes ist es Dritten nicht möglich, basierend auf den offen einsehbaren Transaktionen im Blockchain-Netzwerk, Rückschlüsse auf Geschäftsbeziehungen zu ziehen. Im Falle von z.B. einem Rechtsstreit ist es jedoch durch Teilen des Dokumentes möglich einer dritten Partei Zugriff zu gewähren, um dieser Partei das Nachvollziehen zu ermöglichen.

Eine Ausführungsform der Erfindung weist ein Blockchain-Netzwerk mit M authentifizierten Teilnehmern auf. Bevorzugt hat sich jeder dieser Teilnehmer vorher gegenüber einer Zertifizierungsstelle ausgewiesen und ist somit anhand seiner kryptographischen Schlüssel eindeutig identifizierbar.

Zwei Teilnehmer dieses Netzwerkes möchten nun zum Beispiel ein Grundstück verkaufen bzw. kaufen und setzen einen Vertrag auf. Beiden Parteien liegt nun exakt dasselbe Dokument D in digitaler Form vor.

In einer Ausführungsform der Erfindung können nun beide Teilnehmer basierend auf D die geheime Speicherstelle berechnen, auf die sie schreiben müssen, um dem Partner eine Nachricht zu senden. Beide Parteien errechnen nun eine digitale Signatur, mit welcher sie das Dokument digital unterschreiben und speichern diese Signatur auf den vorher berechneten Speicherstellen.

Beide Parteien können nun sehen und eindeutig nachvollziehen das der Partner das betreffende Dokument unterzeichnet hat. Es lässt sich sogar genau feststellen wann genau diese Unterschrift stattgefunden hat. In Folge der Unveränderbarkeit der Blockchain-Lösung sind auch Manipulationen, d.h. ein Zurückziehen der Unterschrift, ausgeschlossen.

Kommt es zu Streitigkeiten bezüglich der Unterschriften, ist es auch hier möglich, durch Offenlegung des Dokumenten Hashes, einer Dritten Instanz Einblick zu geben, wenn dies nötig ist.

Die oben beschriebenen Aufgaben, Vorteile und Merkmale der Ausführungsformen der vorliegenden Erfindung werden in der folgenden detaillierten Pseudocode-Darstellung verständlich. Der Pseudocode dient der Verdeutlichung der Kernelemente der Erfindung auf Datenverarbeitungsebene. Abhängig von der konkreten Umsetzung, der Datenverarbeitungsumgebung und Anwendungsfall, können Anpassungen nötig sein.

In einer Ausführungsform der Erfindung, werden auf der Client Seite folgende Funktionen bereitgestellt:

```
…

function listen(to, document, *callback){
        var key = H(document)
        var address = HMAC(key, to)
        while(true){
                if (new_data_on(address)){
                        callback(address, ledger[address]);
                }
        }
}

function send(from, to, document, message){
        var key = H(document)
        var address = HMAC(key, to)
        invoke_chaincode("write",  address, message)
}
…
```

In einer Ausführungsform der Erfindung wird auf Blockchain-Netzwerk-Seite folgende Funktion bereitgestellt:

```
...
function write(address, value){
ledger[address] = value
}
...
```

Anschließend führt ein erster Nutzer, PC Partner Y, folgende Schritte aus:

```
listen("partner y", "geheimes dokument")
→ key = H("geheimes dokument")
→ address = HMAC(key, "partner y") = 0x45f0b508c7adc1e0e...
→ Wartet nun auf eingehende Nachrichten auf Speicherstelle < address >
```

Ein zweiter Nutzer, PC Partner X, führt folgende Schritte aus:

```
send("partner x", "partner y", "geheimes dokument", "nachricht 1")
-+ key = H("geheimes dokument")
+ address = HMAC(key, "partner y") = 0x45f0b508c7adc1e0e...
-+ invoke_chaincode("modify_ledger", 0x45f0b508c7adc1e0e..., "nachricht 1")
```

Somit wird hier wird nun der "write" code im Blockchain-Netzwerk getriggert und im Blockchain-Netzwerk wird der folgende Schritt ausgeführt:

```
write(0x45f0b508c7adc1e0e..., "nachricht 1")
→ ledger[0x45f0b508c7adc1e0e...] = "nachricht 1"
```

Abschließend wird optional der erste Nutzer über das Vorliegen einer neuen Information informiert:

```
→ new_data_on(0x45f0b508c7adc1e0e...) = true
-+ send_notification("partner y", "nachricht 1")
```

Fig. 1 zeigt eine Block-Diagramm Darstellung des erfindungsgemäßen Verfahrens. In einer Ausführungsform der Erfindung, besitzen Partner X 100 und Partner Y 200 jeweils das Dokument und eine ID. Beide Partner sind mit einem Blockchain-Netzwerk 300 verbunden.

In dem gezeigten Beispiel Szenario möchte Partner X dem Partner Y eine Nachricht bezüglich des Dokumentes zusenden 301.

Basierend auf dem Dokument und der ID des Partners Y lässt sich nun die Speicherstelle 302 berechnen. Durch Ausführung des Chaincode in S1 wird die Nachricht an die Speicherstelle 302 in das Blockchain-Netzwerk 300 geschrieben 303a. Bevorzugt, erhält Partner X vom Blockchain-Netzwerk 300 eine Erfolgsmeldung 303b nach erfolgter Speicherung.

Auf der anderen Seite beobachtet 305 Partner Y die Speicherstelle. Dazu berechnet er basierend auf dem Dokument und seiner ID die Speicherstelle 306. Durch Registrierung einer Beobachtungsfunktion in S2, wird im Blockchain-Netzwerk 300 nun die Speicherstelle beobachtet 304a. Bei einer Änderung der dort gespeicherten Daten wird eine Benachrichtigung verschickt 304b und Partner Y erhält die Nachricht 307. Hier ist anzumerken, dass das Beobachten eine lokale Aktion ist und diese somit nicht von außen einsehbar ist.

In der voranstehenden Beschreibung werden Ausführungsformen der Erfindung zusammen mit einigen Variationen beschrieben. Die hier verwendeten Begriffe, Beschreibungen und Abbildungen dienen lediglich der Veranschaulichung und sind nicht als Einschränkungen zu verstehen. Alle Begriffe sind in ihrem weitesten vernünftigen Sinne gemeint, sofern nicht anders angegeben.

**Referenzliste**

[1] https://tools.ietf.org/html/rfc2104

**Patentansprüche**

1. Verfahren zum Datenaustausch zwischen einem ersten und einem oder mehreren zweiten Teilnehmern in einem Blockchain-Netzwerk;

   wobei das Blockchain-Netzwerk konfiguriert ist, Daten in einem Ledger zu speichern;
   wobei jeder erste und zweite Teilnehmer Zugriff auf ein bestimmtes Dokument D hat;
   wobei jeder erste Teilnehmer den jeweiligen Partnernamen des einen oder mehrerer zweiten Teilnehmers kennt;
   **dadurch gekennzeichnet, dass**
   jeder erste und jeder zweite Teilnehmer eine bestimmte Speicherstelle im Ledger für die Daten, welche im Datenaustausch von einem ersten Teilnehmer an einen oder mehrere zweite Teilnehmer ausgetauscht werden, errechnet,
   wobei die bestimmte Speicherstelle aus einem Hashwert des Dokuments D und des jeweiligen Partnernamens des jeweiligen zweiten Teilnehmers errechnet wird; und
   wobei die Daten des Datenaustauschs vom ersten Teilnehmer an die bestimmte Speicherstelle geschrieben werden; und
   wobei die Daten des Datenaustauschs von dem einen oder den mehreren zweiten Teilnehmern an der bestimmten Speicherstelle ausgelesen werden.

2. Verfahren nach Anspruch 1, wobei die bestimmte Speicherstelle unter Verwendung des Keyed-Hash Message Authentication Code Verfahren, HMAC, vorzugsweise in Bezug auf das Dokument D, bestimmt wird.

3. Verfahren nach Anspruch 1 oder 2, wobei ein SHA256 als Hashfunktion verwendet wird.

4. Verfahren nach einem der Ansprüche 1 bis 3, wobei die bestimmte Speicherstelle aus H (Partnername + H(D)) bestimmt wird, wobei H eine Hash-Funktion bezeichnet.

5. Verfahren nach einem der Ansprüche 1 bis 4, wobei eine Offenlegung des Dokuments D und/oder eines Hashes des Dokuments D zur nachträglichen Berechnung der Speicherstellen erfolgt.

6. Verfahren nach einem der Ansprüche 1 bis 5, wobei das Dokument D ein Roaming Vertrag zwischen zwei Mobilfunkanbietern ist; oder
   wobei das Dokument D ein digitaler Vertrag ist und die Daten des Datenaustauschs eine digitale Signatur sind.

7. Knoten eines Blockchain-Netzwerks, der als Datenverarbeitungsvorrichtung konfiguriert ist, das Verfahren nach einem der Ansprüche 1 bis 6 als erster Teilnehmer durchzuführen

8. Knoten eines Blockchain-Netzwerks, der als Datenverarbeitungsvorrichtung konfiguriert ist, das Verfahren nach einem der Ansprüche 1 bis 6 als zweiter Teilnehmer durchzuführen.

9. **Blockchain-Netzwerk, das** als Datenverarbeitungsnetzwerk mit mindestens einem Knoten nach Anspruch 7 und 8 konfiguriert ist.

10. Computerprogramm, umfassend Befehle, die bei der Ausführung des Programms durch einen ersten Knoten eines Blockchain-Netzwerks diesen veranlassen, die Schritte des Verfahrens nach einem der Ansprüche 1 bis 6 als erster Teilnehmer auszuführen.

11. Computerprogramm, umfassend Befehle, die bei der Ausführung des Programms durch einen ersten Knoten eines Blockchain-Netzwerks diesen veranlassen, die Schritte des Verfahrens nach einem der Ansprüche 1 bis 6 als zweiter Teilnehmer auszuführen.

12. Computerlesbarer Datenträger, auf dem das Computerprogramm nach Anspruch 10 oder 11 gespeichert ist.

**Claims**

1. Method for a data exchange between a first and one or more second participants in a blockchain network;

   wherein the blockchain network is configured to store data in a ledger;
   wherein each first and second participant has access to a specific document D;
   wherein each first participant knows the respective partner name of the one or more second participants;
   **characterized in that**
   each first and each second participant calculates a specific storage location in the ledger for the data that is exchanged from a first participant to one or more second participants in the data exchange,
   wherein the specific storage location is calculated from a hash value of the document D and the respective partner name of the respective second participant; and
   wherein the data of the data exchange is written by the first participant to the specific storage location; and
   wherein the data of the data exchange is read out by the one or more second participants at the specific storage location.

2. The method according to claim 1, wherein the specific storage location is determined using the Keyed-Hash Message Authentication Code method, HMAC, preferably with respect to the document D.

3. The method according to claim 1 or 2, wherein a SHA256 is used as a hash function.

4. The method according to any one of claims 1 to 3, wherein the specific storage location is determined from H (partner name + H(D)), wherein H denotes a hash function.

5. The method according to any one of claims 1 to 4, wherein a disclosure of the document D and/or a hash of the document D is made for a subsequent calculation of the storage locations.

6. The method according to any one of claims 1 to 5, wherein the document D is a roaming contract between two mobile service providers; or
   wherein the document D is a digital contract and the data of the data exchange is a digital signature.

7. A node of a blockchain network, which, as a data processing device, is configured to perform the method according to any one of claims 1 to 6 as a first participant.

8. A node of a blockchain network, which, as a data processing device, is configured to perform the method according to any one of claims 1 to 6 as a second participant.

9. A blockchain network which, as a data processing network, is configured with at least one node according to claims 7 and 8.

10. A computer program comprising instructions which, when the program is executed by a first node of a blockchain network, cause the first node to execute the steps of the method according to any one of claims 1 to 6 as a first participant.

11. A computer program comprising instructions which, when the program is executed by a first node of a blockchain network, cause the first node to execute the steps of the method according to any one of claims 1 to 6 as a second participant.

12. A computer-readable data carrier on which the computer program according to claim 10 or 11 is stored.

**Revendications**

1. Procédé d'échange de données entre un premier et un ou plusieurs deuxièmes participants dans un réseau de chaînes de blocs ;

   dans lequel le réseau de chaînes de blocs est configuré pour stocker des données dans un ledger (registre) ;
   dans lequel chaque premier et deuxième participant a accès à un document D spécifique ;
   dans lequel chaque premier participant connaît le nom de partenaire respectif de l'un ou des plusieurs deuxièmes participants ;
   **caractérisé en ce que**
   chaque premier et chaque deuxième participant calcule un emplacement de mémoire déterminé dans le ledger pour les données qui sont échangées lors de l'échange de données d'un premier participant à un ou plusieurs deuxièmes participants,
   dans lequel l'emplacement de mémoire déterminé est calculé à partir d'une valeur de hachage du document D et du nom de partenaire respectif du deuxième participant respectif ; et
   dans lequel les données de l'échange de données sont écrites par le premier participant à l'emplacement de mémoire déterminé ; et
   dans lequel les données de l'échange de données sont lues par l'un ou les plusieurs des deuxièmes participants à l'emplacement de mémoire déterminé.

2. Procédé selon la revendication 1, dans lequel l'emplacement de mémoire déterminé est déterminé en utilisant le procédé HMAC, « Keyed-Hash Message Authentication Code » (code d'authentification de message de hachage à clé), de préférence en ce qui concerne le document D.

3. Procédé selon la revendication 1 ou 2, dans lequel un SHA256 est utilisé comme fonction de hachage.

4. Procédé selon l'une des revendications 1 à 3, dans lequel l'emplacement de mémoire déterminé est déterminé à partir de H (nom de partenaire + H(D)), où H désigne une fonction de hachage.

5. Procédé selon l'une des revendications 1 à 4, dans lequel une divulgation du document D et/ou d'un hachage du document D est effectuée pour calculer ultérieurement les emplacements de mémoire.

6. Procédé selon l'une des revendications 1 à 5, dans lequel le document D est un contrat d'itinérance entre deux opérateurs de téléphonie mobile ; ou
   dans lequel le document D est un contrat numérique et les données de l'échange de données sont une signature numérique.

7. Noeud d'un réseau de chaînes de blocs configuré en tant que dispositif de traitement de données pour mettre en oeuvre le procédé selon l'une des revendications 1 à 6 en tant que premier participant.

8. Noeud d'un réseau de chaînes de blocs configuré en tant que dispositif de traitement de données pour mettre en oeuvre le procédé selon l'une des revendications 1 à 6 en tant que deuxième participant.

9. Réseau de chaînes de blocs configuré comme un réseau de traitement de données ayant au moins un noeud selon les revendications 7 et 8.

**10.** Programme informatique comprenant des instructions qui, lorsque le programme est exécuté par un premier noeud d'un réseau de chaînes de blocs, amènent ce noeud à exécuter les étapes du procédé selon l'une quelconque des revendications 1 à 6 en tant que premier participant.

**11.** Programme informatique comprenant des instructions qui, lors de l'exécution du programme par un premier noeud d'un réseau de chaînes de blocs, amènent celui-ci à exécuter les étapes du procédé selon l'une des revendications 1 à 6 en tant que deuxième participant.

**12.** Support de données lisible par ordinateur sur lequel est enregistré le programme d'ordinateur selon la revendication 10 ou 11.

Fig.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20200280444 A1
- KR 20180069470 A